Europäisches Patentamt

European Patent Office

Office européen des brevets

(19)

(11) **EP 1 460 578 A1**

## (12) EUROPEAN PATENT APPLICATION

(43) Date of publication:
**22.09.2004 Bulletin 2004/39**

(51) Int Cl.⁷: **G06K 15/12**, B41J 2/45

(21) Application number: **04005669.9**

(22) Date of filing: **10.03.2004**

| | |
|---|---|
| (84) Designated Contracting States: **AT BE BG CH CY CZ DE DK EE ES FI FR GB GR HU IE IT LI LU MC NL PL PT RO SE SI SK TR** Designated Extension States: **AL LT LV MK** | (72) Inventors: • **De Mario, Christopher Rochester, NY 14626 (US)** • **Kamp, Dennis Reed Churchville, NY 14428 (US)** • **Munechika, Stacy M. Rochester, NY 14617 (US)** • **O'Hara, Shawn Edward Rochester, NY 14626 (US)** • **Regelsberger, Matthias Rochester, NY 14612 (US)** |
| (30) Priority: **18.03.2003 US 455498 P** | |
| (71) Applicants: • **Heidelberger Druckmaschinen Aktiengesellschaft 69115 Heidelberg (DE)** • **NexPress Solutions LLC Rochester, NY 14653-7103 (US)** | (74) Representative: **Franzen, Peter Heidelberger Druckmaschinen AG, Kurfürsten-Anlage 52-60 69115 Heidelberg (DE)** |

(54) **Led writer with improved uniform light output**

(57) The invention adjusts the calibration of each light emitting element, such as a light emitting diode (LED) by storing data representative of the difference between a linear or non-linear characteristic of the LED. In a non-impact printer or copier, a print engine uses LEDs to form a latent image on a photosensitive member. A linear regression identifies the differences be-tween the slope of the individual LED and the average LED. A further, non-linear regression identifies the cur-vature of the individual LEDs. The differences in linear slope and/or curvature are stored and used to correct the calibration of each LED when the LED is recalibrated during operation and in response to a global calibration signal, GREF.

FIG. 4

## Description

## Background

This disclosure relates in general to the area of digital printing as e.g. incorporated and utilized in digital copy machines and printers or digital printing presses. More specifically, the disclosure relates to the image formation step in the printing process employing electrographic or electrophotographic printing process.

As demands on image quality continue to increase to produce better images at high speeds, the technology utilized in the printing process is challenged to deliver better performance. In order to form an image these printing processes produce a charge modulation on a uniformly charged photoconductor by a modulated light exposure. The modulation of the light exposure depends on the image content being printed. The resulting charge modulation on the photoconductor is in all details a true charge-image of the image being printed. This image-wise modulated charge-pattern is often referred to as latent image. This latent image is developed in a subsequent toning step, and then the toner developed latent image is subsequently transferred to a receiver e.g. paper. The toner is then fixed to the receiver in a final fusing step.

In a multi-step printing process as described above, each individual process step can cause image artifacts or degrade in the fidelity of the final image. This patent relates to improvements in the exposure step that provide higher uniformity in light exposure over the full exposure range of the exposure systems. This improvement is readily appreciated in prints containing relatively large areas of low or medium densities within the image. The patent relates equally to multilevel-printing in black/white and color printing processes.

Non-impact printers use light emitting diode (LED) printheads, examples of which may be found in U.S. Pat. Nos. 5,255,013 and 5,253,934, it is known that correction of the recording elements; i.e., LEDs, is often required due to non-uniformity in light output of these elements. Typically, a non-uniformity correction look-up table (LUT) is provided to adjust exposure times so that at any one required grey level all the LEDs can be enabled to output a uniform amount of exposure energy. This can be achieved by adjusting exposure times and/or intensities so that dimmer LEDs are enabled, for longer exposure times than brighter LEDs so that the exposure energy from all LEDs is the same. As noted in the above patents, calibration for non-uniformity requires a number of steps, the results of which are stored in a non-uniformity correction look-up table so that grey level image data may be modified. In the case of a copier and/ or printer having more than one color recording mode and/or more than one bit depth of input image data defining grey level e.g. different images may be defined with grey level data of 1, 2 or 4-bits per pixel and/or with different image types (text, picture and halftone inputs), a problem is presented in changing the exposure parameters without the need to hold up or delay printing. Those skilled in the art know how to calibrate all LEDs to have at least one, identical light emission for a calibrated input. They also know how to change the calibration of LEDs with one signal so that all LEDs receive a common change. However, there remains an unsolved problem of LEDs operating differently away from their new calibration points. Although the manufacture of LEDs and their driver circuits are subject to tight manufacturing tolerances, nevertheless each LED and each driver circuit has a unique operating characteristic. This is true of virtually all semiconductor devices. Devices made on a common wafer will be nearly identical in operating characteristics. However, devices made on different wafers will have different operating characteristics. Manufacturers often sort their devices by the relative degree of similarity between devices and by how closely the individual devices match a customer's specifications. If a customer demands very high uniformity among devices, a manufacturer may have to scrap numerous devices to meet tight tolerance requirements. That would make the individual cost of specified devices very high. Accordingly, there is a need for a flexible system that can account for the individual differences in the light emission of each LED and adjust the light emissions of LEDs so that all LEDs emit the same amount of light for a given input signal and respond with the same change to adjustments without the need to hold up or delay printing.

## Summary of Invention

The electrophotographic printing process is a multi-step process including as fundamental steps: the electrical conditioning of the photoconductor to a uniform charge level, an exposure step to produce the image-wise modulated charge pattern (latent image) on the photoconductor, a development step providing toner or ink to said latent, a transfer step moving the image-wise modulated toner or ink-pattern to the receiver and a fixating step adhering the toner or ink permanently to the receiver. For print production equipment, a continuous process is typically employed using rotating members to apply and execute each of the above steps repeatedly, consistently and without discernable loss of image quality in the printed output.

In the above process, image formation begins with the modulation of the uniform charge pattern in the exposure step. The exposure system provides image-wise modulated light output to create an image-wise modulated charge pattern on the photoconductor. The improvements according to this disclosure relate to digital exposure system utilizing a linear array of LEDs. Such exposure systems or LED-writers, printheads or printbars are described in United States Patent Nos. 5,926,201 and 5,739,841.

LED-writers are typically comprised of a series of contiguous LED linear array chips. Their light outputs are imaged onto a photoconductor receptor by means of a gradient-index lens (e.g. Nippon Sheet Glass Inc. SELFOC lens). The LEDs associated with each LED array chip are typically activated by an integrated circuit (IC) that provides a prescribed amount of current to a given LED for a prescribed duration. The circuit is often referred to as 'current driver'. The LEDs in each array have different light-output efficiencies that yields inherently non-uniform light outputs from different LEDs for a given amount of current. The gradient-index lens also has an inherent non-uniform throughput. The combination of the LEDs and lens creates an overall non-uniform light-output (LOP) or non-uniform exposure for a given amount of LED activation time. This type of non-uniformity is static and does not change with the image content.

Thus, in order to create a uniform exposure needed for a large area flat-field image, a combination of current adjustments or on-time adjustments must be performed on each LED and/or each LED array to compensate for the exposure differences between individual LEDs or LED arrays.

Other patents also disclose methods and exposure systems to improve light output uniformity. United States Patent No. 5,859,658 describes a method and aspects of an exposure system to compensate for changes in light output as a function of usage. The I-V (current-voltage) characteristic of individual LEDs is measured yielding a correction value that is added or subtracted from the light output value requested during the printing process. United States Patent No. 5,640,190 describes another method and exposure system utilizing three levels of corrections. The first two levels of corrections are intended to compensate for non-uniformity of light output of the exposure system itself, whereas the third level of correction compensates for non-uniformity of the electrophotographic printing process. Although the construction of the exposure system disclosed in United States Patent No. 5,60,190 is similar to the one referred to in this disclosure, the method of light output correction according to this patent is different in implementation and purpose.

In the above references, the uniformity in light output (LOP) is achieved by taking into account the light output of each individual LED and applying a correction to the light output requested according to the image data value. During the manufacturing process of the exposure system, the light output of each LED is measured and characterized so that an absolute calibration of the exposure system is achieved. The resulting data is stored into memory built into each exposure system. According to prior art referenced above, the light output of the LEDs is measured at about mid-point of the exposure range available. The LED-specific correction to the light output requested according to the image data value is accurate only for the calibration point of the exposure range. The inventors recognized that at minimum or maximum light output of the available range, the LED-specific corrections are inaccurate resulting in a non-uniform light output both at minimum and maximum exposure.

Therefore, in contrast to prior art and according to this patent, the light output characteristics of the LEDs are measured at multiple light output levels of the exposure system. The resulting data about each LED is analyzed and a second type of data is stored into memory of the exposure system. This second type of data describes the light output of each individual LED as a function of average light output of the LED-array.

Another aspect of this invention provides a third type of data to improve the light output uniformity even further. The third type of data is suited to include for non-linear adjustments to the average light output.

According to another aspect of this invention, both types of corrections are applied in such a way that older exposure systems without such corrections of second and third type can still be used in printing processes designed to utilize the exposure corrections described in this disclosure.

Since the print production speed is steadily increasing, digital processing time to calculate the LED-specific correction to the requested image LOP-value is limited. It is, therefore, another objective of this invention to provide a technique for data reduction and implementation to achieve the desired increase in light output uniformity without the need to hold up or delay printing.

**Drawings**

FIG. is a graph showing the range of linear operating characteristics of LEDs.
FIG.2 is a graph showing the non-linear operating characteristic of an LED
FIG.3 is a graph showing the non-linear contribution of a correction of the third type to a correction of the second type.
FIG. 4 is a diagram of an electrophotographic recording apparatus of the invention;
FIG. 5 is a block diagram of an image data path in a portion of the apparatus of FIG. 1;
in accordance with the method and apparatus of the invention;
FIG. 6 is a block diagram of a printhead that receives corrected image data signals from a writer interface that is formed in accordance with the invention;

FIG. 7 illustrates three of the current driver channels that form a part of a driver chip that is included on the printhead of FIG. 6;

**Detailed Description**

Prior art machines had one global adjustment value for all LEDs. By changing a single reference voltage GREF, all LEDs were simultaneously adjusted by an amount determined by their initial calibration. However, closer study of the characteristics of LEDs showed that all did not change in the same way when GREF changed. Each LED has a unique brightness v. voltage characteristic. When the same change in applied voltage or supplied current is made to each LED, the corresponding changes in light output (LOP) are not identical. For example, a 10% change in applied voltage or input current to each LED will produce a variety of different changes in the individual outputs of each LED. The outputs may vary from between 15% to 5% with 10% being the average. This is a so-called first order effect. It can be addressed by measuring several points on the LED characteristic curve and plotting a straight line to determine the slope of the line. The slope of the line of for each LED may be stored so that the LED will be suitably adjusted. Then, if a 10% output change is desired, the "brighter" LEDs (15%) will receive less voltage or current and the "dimmer" LEDs (5%) will receive more voltage or current. However, an even closer examination of the LED output characteristic shows that it follows not a straight line with a constant slope, but rather a curved line with a variable slope. This is known as a second order effect. As the operating point of the LED is changed it rate of change also varies. This value may also be identified and stored for individual correcting of each LED or bank of LEDs.

The invention is backwards compatible with prior art machines if the machines can accept new data for first and second order corrections. If the machines cannot accept the new data, they can either be modified to have new hardware and software to accept the data. Even if the hardware cannot execute the correction provided by the new data, the machines can still operate with the basic, first correction. The invention is thus cumulative and can add second and third corrections to prior art machines that have a first or one, global correction. In order to explain the invention, the following description will show details of the two new corrections and then will show how the second and third corrections are added to the existing first correction. The details will show how the prior art applies a single point correction to all values of GREF, how the invention provides a second correction that provides a linear or first order correction and a third correction based on the parabolic characteristic of the output of the LEDs.

Details of the Correction of Second Type

According to this invention, a second type of data is created during the manufacture of the exposure system. This second type of data describes the light output (LOP) of each LED as a function of average light output of the entire LED-array. With two or more actually measured LOP-values for each LED as a function of average-LOP, a slope of LED-LOP as a function of average-LOP can be calculated. For each LED, there is now data available correlating the actual LED-LOP to the average LOP of the exposure system. Inversely and according to this invention, this measured correlation is used to derive a correction of second type for each LED for any given average-LOP.

Analysis of the LED-specific slopes showed that current manufacturing of the LED arrays and the current controlling circuitry are the largest contributors to the non-uniformity of LOP for the entire range of average LOP of the exposure system. A LED-array and current controller typically involves about 200 LEDs. As a matter of fact, the current manufacturing process incurs additional cost by inspection and sorting the LED arrays and current controllers into groups according to average-LOP.

Therefore and according to this invention, the measured slopes for each LED are grouped according to their common current controller. This effectively reduces the number of slopes from e.g. 8000 (the number of LEDs in the entire array) to e.g. 94 (the number of current controllers in the entire exposure system). Furthermore, rather than using the absolute value for the slopes measured, preferably and according to this invention the deviation from the average slope for the entire exposure system is calculated and stored at the time of manufacture. This latter point allows backwards compatibility with digital writing systems that were not characterized with regard to their LED-specific LOP at various average-LOP levels according to this disclosure.

In keeping with the nomenclature used in the prior art reference above, the average LOP-value requested (in physical units such as ergs/cm$^2$) by the exposure process controller EPS30 is converted into a device specific parameter affecting the average light output by setting the global current reference (GREF). Also, there is a second device specific parameter affecting the current setting of each group of LEDs connected to the same current controller. That second parameter is designated local current reference (LREF) and is used in the absolute calibration of the exposure device. At the calibration point, e.g. the mid-point of the exposure range, the calibration value for the global current reference (e.g. GREFcal also selected at mid-point of its device specific range) is applied to all current controllers equally. The absolute calibration of the exposure system is then obtained by loading a value for the second device specific parameter in each current controller (each controlling a group of LEDs) such that the desired calibrated LOPcal averaged over all LEDs or groups of LEDs is obtained with best uniformity. According to prior art referenced above, the values for LREF determined at the time of absolute calibration remain unchanged and are stored with the exposure system for retrieval during operation. For the relative calibration of the exposure system and in accordance with prior art referenced above, the LOP of the exposure device is measured and averaged for additional values of GREF, typically a low and a high value. The resulting characteristic LOP=f (GREF) is nearly linear and constitutes the calibration and exposure control according to prior art. Therefore, in accordance to prior art referenced above, each current controller is loaded with the same value for GREF to obtain the average LOP (in physical units such as ergs/cm$^2$) requested by the exposure process controller EPC. In contrast and according to this invention, the average light output requested is modified for each current controller to result in GREF_i where "i" refers to the individual current controller. The individual GREF_i for each current controller might be less, equal or greater than the value GREF derived for the average-LOP of the exposure system. According to, this invention, each current controller is loaded with a specific GREF_i rather than a single <GREF> common to all current controllers. All average values are enclosed in oppositely facing angled brackets < --- >. As such, the single value GREF common to all current controllers is shown as <GREF> and the average light output is shown as <LOP>. It should be noted that according to this invention, the loading of the current controllers with GREF_i rather than <GREF> provides the image quality improvements according to this invention. However, loading the individual current controller with a single <GREF> value rather than unique individual GREF_i values provides the exposure control according to prior art and provides the desired backwards compatibility mentioned above.

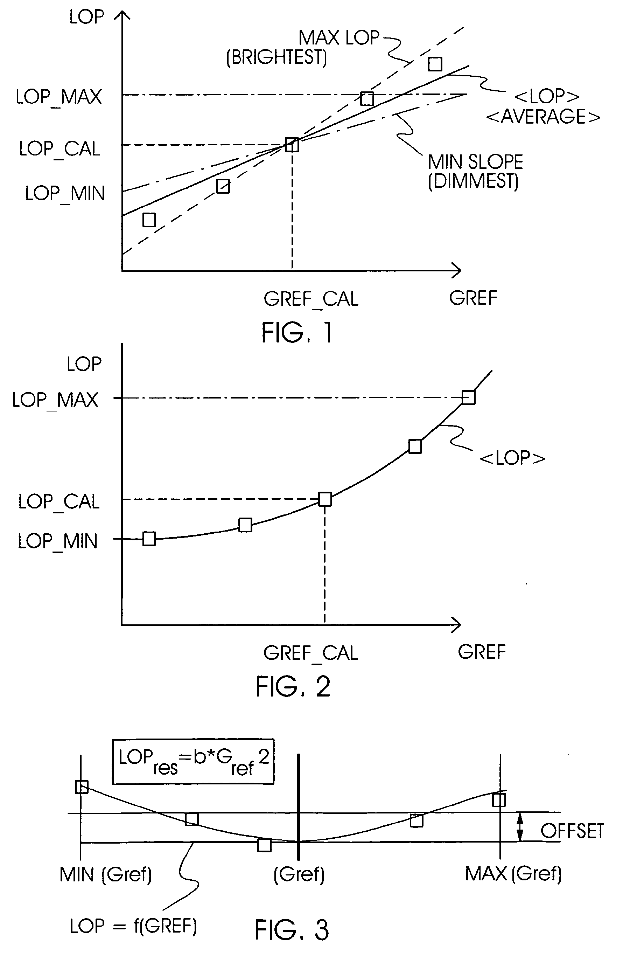

FIG. 1 illustrates the improvements in light output control of the exposure system according to this invention using the correction of first type. It shows five boxes on the line <LOP> to illustrate where the <LOP>=f (<GREF>) is sampled. The point (LOP_cal, GREF_cal) is one of those five points. It illustrates the <LOP> of the exposure system as a function of the device specific control parameter <GREF>. At the mid-point of the exposure range an absolute calibration of the exposure system is obtained for the exposure device and together with at least two preferably four additional measurements at lower and higher <GREF>-settings yield the average slope <LOP>=f(<GREF>) according to prior art.

FIG. 1 illustrates the problems that are overlooked by the prior art. There is shown a graph of <LOP> and graphs of individual LOPs of the brightest LED, MAX LED and the dimmest LED, MIN LED. If <GREF> is changed by an amount, the corresponding change in MAX LOP will be more than <LOP> and the corresponding change in MIN LOP will be less than <LOP>. The invention accounts for these differences in changes in the light outputs of the individual LEDs in order to improve the performance of the copier or printer.

In contrast to the prior art and according to this invention, measuring the LOP at high and low exposure, an averaged slope of prior art <LOP> = f(<GREF>) is obtained from the averaged measurements of the individual characteristics of each LED whose expression is LOP_i = f(GREF_i). Given LOP-uniformities achieved in current manufacturing processes, the LED-specific slopes are grouped according to current controllers in the exposure system. The LOP-output range of the exposure system is given by the current controller with the lowest averaged (grouped) slope (GREF_min) as illustrated in the sketch. Although the current controllers used in each exposure systems manufactured to date are only from one group sorted according to average-LOP at the calibration point, the correction in light output control according to this disclosure are typically in the range of 10% to 15%. This correction is the largest at minimum or maximum LOP of the exposure system. In images containing large low or high density areas within the image, the uncorrected LOP becomes visible and will be perceived as an image artifact.

Details of the Correction of Third Type

According to this invention, a third type of data is created during the manufacture of the exposure system. This third type of data describes the non-linear light output (LOP) of each LED as a function of average light output of the entire LED-array. With three or more actually measured LOP-values for each LED as a function of average-LOP, a curvature of LED-LOP as a function of average-LOP can be calculated. For each LED, there is now data available correlating the non-linear actual LED-LOP to the average LOP of the exposure system. Inversely and according to this invention, this measured non-linearity is used to derive a correction of third type for each LED for any given average-LOP.

The correction of third type is ideally suited to compensate for the known nonlinearity of the I-V characteristic of the light emitting diode. The larger the overall light output dynamic range is, the more the LED's non-linear I-V characteristics contribute to the non-uniformity of light output. In general, the I-V characteristic of semiconductor junctions (e.g. diodes) is often expressed as an exponential. It is, therefore, more likely than not, that the actual LOP measured is a function of applied current is non-linear.

FIG. 2 depicts the actual LOP of one LED as a function of applied current (expressed in GREF) measured at e.g. five values. The curvature is exaggerated for this purpose of this illustration. It is understood that a similar graph can be drawn for groups of LEDs. According to this disclosure, the non-linear LOP (as shown in FIG. 2) of individual LEDs or groups of LEDs is applied in form of a quadratic correction to the desired LOP during the printing process.

This correction of third type as well as the linear correction of second type is derived from the same calibration data generated for each exposure system at the time of manufacture.

The following step-by-step description of the standard correction (prior art) and the corrections of second and third types (according to this invention) illustrate their relationship to each other, their determination during manufacture of the exposure system and their application during the printing process:

Step #1 (Prior Art)

From the calibration data (GREF, LOP_i), the best linear fit of the data for the entire exposure system is determined. A linear regression of the average <LOP> (averaged for all LEDs of the exposure system) determines the average slope <m> and an average intercept <a>:

$$< LOP > = <m> * <GREF > + <a>$$

Conveniently, the calibration point for the exposure device is chosen to be midrange so that errors due to deviation form the linear dependency are minimized. With the calibration point denoted by GREF_cal and LOP_cal, the above equation is re-written as:

$$< LOP > = <m> * (<GREF > - GREF\_cal) + LOP\_cal$$

The inverse of this equation is executed during the printing process to achieve the desired LOP requested by the logic and control system governing the printing process:

$$<GREF > = \{ < LOP > - LOP\_cal \}/ <m> + GREF\_cal$$

The average of the intercept <a> corresponds to the LOP at the calibration point of the exposure system. The calibration point is denoted by GREF_cal and LOP_cal and typically chosen to be near or at the center of the LOP-range to minimize error at or near the minimum or maximum of the exposure range. It is this error that causes non-uniformities in the exposure system. That error will be addressed in the corrections of second and third type below. In prior art systems, only the GREF_cal was stored. Such systems assumed that all LEDs had essentially the same operating characteristics and used the average slope <m> for correcting all LEDs. To that end, LEDs with similar operating characteristics were grouped together. However, as demands for more precise exposure have increased, grouping of similar LEDs is no longer sufficient and individual adjustments of all LEDs are now required.

Step #2 (Correction of Second Type)

One way of correcting each LED is to store its actual linear slope. However, one then has to multiply the slope by the applied voltage or current to determine the new light output value. While such an operation is within the scope of this invention, there is a simpler way of storing information that has the added benefit of backwards compatibility. The invention uses only the difference between the average slope and the actual slope.

Rather than fitting the averaged <LOP> of all LEDs of the exposure system, the LOP_i as a function of GREF is fitted for individual LEDs or groups of LEDs:

$$LOP\_i = m\_i * (GRE \_i - GREF\_cal) + LOP\_cal$$

with i denoting LED-# or group of LEDs.

The correction of second type is calculated for the individual LEDs or groups of LEDs with respect to the average for the exposure system (according to step #1):

$$LOP\_i = (<m> - m\_i) * (GREF\_i - GREF\_cal) + LOP\_cal$$

$$LOP\_i = <m> * (<GREF > - GREF\_cal) + \Delta m\_i * (GREF\_i - GREF\_cal) +$$

LOP_cal.

During the printing process the inverse of the above equation is executed to set the individual LEDs or groups of LEDs such that the desired LOP requested by the logic and control unit is achieved. Since the LOP at the calibration point denoted (GREF_cal, LOP_cal) is the same for all LEDs or groups of LEDs, the following expression is different from the one in step #1 only by the second term on the right-hand side:

$$GREF\_i = \{ <LOP> - LOP\_cal\}/<m> + \{ <LOP> - LOP\_cal\}/ \Delta m\_i +$$

$$GREF\_cal.$$

The second term on the right-hand side [{ <LOP> - LOP_cal }/ $\Delta$m_i] is the correction of second type according to this patent. The value of the correction of second type, $\Delta$m_i, is stored conveniently into memory 84 of the exposure system at the time of manufacture.

For example, assume that the average slope <m> = 3 and the individual slope for LED #298 is m_i = 3.5. That means the LED#298 has a stronger brightness characteristic than does the average LED. Accordingly, to have LED#298 perform at the designate average value, the applied voltage or supplied current is reduced. The value "-0.5" is stored as $\Delta$m_i and it is used to reduce the LOP_i of LED #298. In other words, the basis for of the algorithm $y = mx + b$ remains the same. The only change is that "m" is reduced by a stored constant of "0.5." On the other hand, assume that LED #576 has dimmer characteristic and its linear slope is only 2.5. A $\Delta$m_i of "+0.5" is stored for LED #576 and its applied voltage or supplied current is increased to achieve the desired output. The circuitry 80 calculates the correction for each value of $\Delta$m_i.

Step #3 (Correction of Third Type)

We know that the operating characteristic of an LED is not actually linear. The linear regression used above is only a first order correction. The actual operating characteristic of an LED is a curve. In Step#3 a further correction is made to correct for at least the second order or quadratic error. Using the same calibration data (GREF, LOP_i), the residual, individual light output correction, LOP_res_i = LOP_i - LOP_lin_i (the difference between the actual light output and the linear correction) is calculated and the data points (LOP_res_i, GREF) are fitted to a quadratic function only. Note that this correction according to Step #3 can be applied either to the averaged LOP determined in Step #1 (prior art) or to the LOP for individual LEDs or groups of LEDs determined in Step #2. The index "i" (denoting individual LEDs or groups of LEDs) is omitted in FIG. 3. The quadratic function describing the correction of third type is centered at the half-point of the GREF range. In other words, the variation in LOP over the range GREF_min to GREF_max is a quadratic regression relationship that is rotated with respect to the Cartesian coordinates of FIG. 2. FIG. 3 is shifted to show the quadratic regression. The general algorithm for the form of the curve shown in FIG. 3 is: $y = bx^2$. Those skilled in the art will recognize the form of the curve as a parabola with a curvature coefficient of "*b*."

It can be seen that the coordinate origin for the residual fit of FIG. 3 is shifted by the indicated OFFSET from the linear regression described in Step #1 (prior art) or Step #2 (correction of second type). The shift in the mean is given by OFFSET_i = 1/2 * b_i * (GREF_ range/2)$^2$. Coefficient b is the coefficient for the correction of third type. This coefficient is measured by the manufacturer at the time the LED is made. The value of the correction bi is conveniently stored into the memory 84 of the exposure system at the time of manufacture.

During the printing process the correction of third type is evaluated and applied to the calculation done in step #1 or step #2. The correction to the setting of the exposure system <GREF > according to step #1 is given by:

$$\Delta GREF = <b> *(<GREF> - GREF\_range/2)^{2} - \tfrac{1}{2} * <b> *$$

$$(GREF\_range/2)^{2}$$

Analogous, the correction to the setting of individual LEDs or groups of LEDs according to step #2 is given by:

$$\Delta GREF = b\_i *( GREF\_i - GREF\_range/2)^{2} - \tfrac{1}{2} * b\_i * (GREF\_range/2).$$

The values for the third correction are also constants that can be stored in memory 84 and converted into applied voltage or supplied current corrections by circuitry 80. Please note that the correction term is entirely a function of coefficient b. Thus, the calculation of the setting of the exposure system including the quadratic correction can always be carried out. The correction is applied to the linear regression of STEP#1 or STEP#2.

Advantages

The light output corrections according to this invention improve exposure systems used in digital printing to date. The method according to this disclosure is improve the LOP-uniformity for the entire LOP-range of the exposure subsystem. This disclosure provides detailed descriptions of aspects of the calibration of exposure systems using LED-arrays, the data reduction in view of current manufacturing practices and limitations of the exposure system and aspects of the implementation of the corrections into the software controlling the LED-exposure timing. Specifically, corrections of second and third type are described, whereas the correction of third type is either a correction to that of second type or directly applied to the corrections of prior art.

The invention improves the uniformity of light output of the exposure system over its full dynamic LOP-range. The perceived image quality, specifically in flat field or nearly flat field is visibly improved. The improvements in light output uniformity also reduce the costs of inspecting and sorting the LED-current controllers during the manufacturing process, because the individual characteristics of the LED and/or the current control circuit (for controlling groups of LEDs) are taken into consideration. This invention incorporates a method and apparatus for performing the calibration and correction of a LED-printhead such that the resultant non-uniformity correction factors generated by that invention yield optimal results for the production of flat-field images over a range of exposure conditions. The invention can be applied to optimize the correction factors for both individual LED as well as groups (e.g. LED arrays) of LEDs. One such system having only one point value for GREF is found in U. S. Patent No. 5,739,841.

Because apparatus of the general type described herein are well known the present description will be directed in particular to elements forming part of, or cooperating more directly with, the present invention.

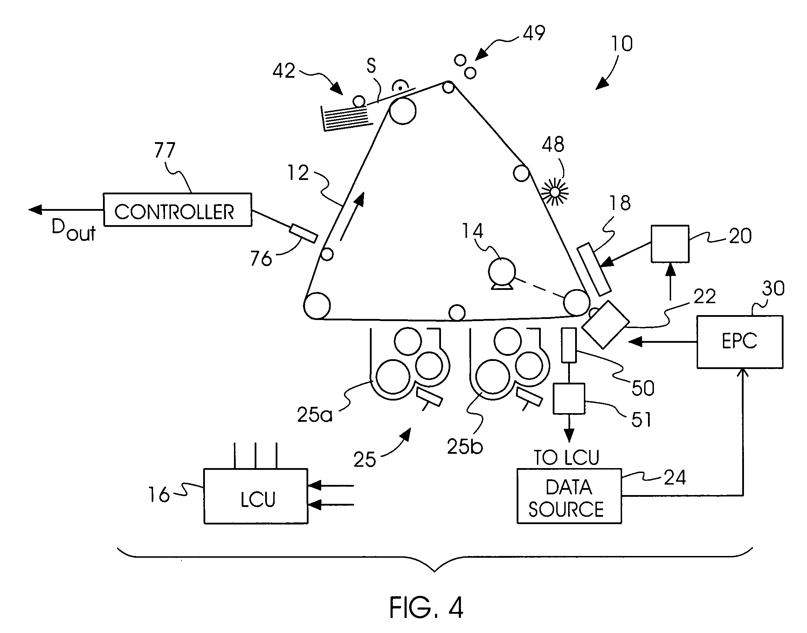

With reference to the copier/printer apparatus 10 as shown in FIG. 4, a moving recording member such as photoconductive belt 12 is driven by a motor 14 past a series of work stations of the printer. A logic and control unit (LCU) 16, which has a digital computer, has a stored program for sequentially actuating the; work stations.

Briefly, a charging station 18 sensitizes belt 12 by applying a uniform electrostatic charge of predetermined primary voltage $V_0$ to the surface of the belt. The output of the charger is regulated by a programmable controller 20, which is in turn controlled by LCU 16 to adjust primary voltage $V_0$ for example through control of electrical potential (Vgrid) to a grid that controls movement of charges from charging wires to the surface of the recording member as is well known.

At an exposure station, projected light from a non-impact write head 22 dissipates the electrostatic charge on the photoconductive belt to form a latent image of a document to be copied or printed. The write head or printhead has an array of recording elements preferably light-emitting diodes (LEDs) or other light or radiation-emitting sources for exposing the photoconductive belt picture element (pixel) by picture element with an intensity regulated by current drivers on the printhead and as will be described in more detail below.

Image data for recording is provided by a data source 24 for generating electrical image data signals such as a computer, a document scanner, a memory, a data network facsimile, word processor, data reader, etc. Signals from the data source and control signals from the LCU are provided to an exposure process controller (EPC) 30. The EPC responds to these signals to generate signals for output to the printhead for controlling selective enablement of the LEDs. Light from the LEDs may be focused by a suitable lens for imaging upon the electrostatically charged belt 12. The printhead in addition to recording image information is also adapted to record process control patches that are recorded usually in an interframe between recorded images for testing to determine a need to adjust process control parameters. In order to form patches with density, the LCU or EPC 30 may be provided with ROM or other memory representing data for creation of a patch. Travel of belt 12 brings the areas bearing the electrostatic latent images into a development area 25. The development area may have one or more magnetic brush development stations 25a, 25b. Each station has a magnetic brush in juxtaposition to, but spaced from, the travel path of the belt. Magnetic brush development stations are well known. For example, see U.S. Pat. Nos. 4,473,029 to Fritz et al and U.S. Pat. No. 4,546,060 to Miskinis et al. The two stations 25a, 25b are provided to selectively provide respective different color toners for development of recorded images on the belt 12.

LCU 16 selectively activates the appropriate development station in relation to the passage of the image areas containing latent images to selectively bring the magnetic brush into engagement with or a small spacing from the belt. The charged toner particles of the engaged magnetic brush are attracted to the latent image pattern to develop the pattern.

As is well understood in the art, conductive portions of the development station, such as conductive applicator cylinders, act as electrodes. The electrodes are connected to programmable controller (not shown) supplying a bias potential $V_B$. Details regarding the development station are provided as an example, but are not essential to the invention.

A transfer station 42 as is also well known is provided for moving a receiver sheet S into engagement with the photoconductor in register with the image for transferring the image to a receiver. Alternatively, an intermediate member may have the image transferred to it and the image may then be transferred to the receiver. A cleaning station 48 is also provided subsequent to the transfer station for removing toner from the belt 12 to allow reuse of the surface for forming additional images. In lieu of a belt, a drum photoconductor or other structure for supporting an image may be used. After transfer of the unfixed toner images to a receiver sheet, such sheet is transported to a fuser station 49 where the image is fixed.

The LCU provides overall control of the apparatus and its various subsystems as is well known. Programming commercially available microprocessors is a conventional skill well understood in the art. The following disclosure is written to enable a programmer having ordinary skill in the art to produce an appropriate control program for such a microprocessor. In lieu of only microprocessors the logic operations described herein may be provided by or in combination with dedicated or programmable logic devices.

Process control strategies generally utilize various sensors to provide real-time control of the electrostatographic process and to provide "constant" image quality output from the user's perspective. One such sensor may be a densitometer 76 to monitor development of test patches in non-image areas of photoconductive belt 12, as is well known in the art.

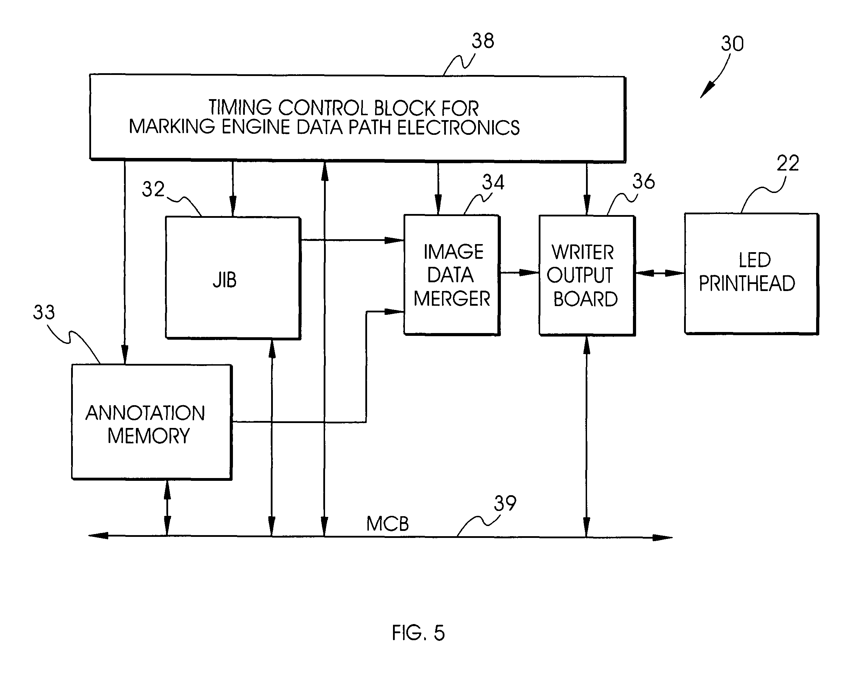

With reference now to FIG. 5, a block diagram schematic of the EPC's data path in accordance with the invention is provided. The exposure system controller 30 includes a job image buffer (JIB) 32 into which rasterized data received from data source 24 is stored for example in compressed form. Data from data source 24 is compressed, stored in a multi-page image buffer and expanded for output from the JIB. Several pages of data for each job can be stored to allow for reproducing multiple copy sets. An example of a job image buffer is described in U.S. Pat. No. 5,384,646. When a production job is stored in the JIB is to be printed, the image data is output to an image data merger device 34 wherein the data in the JIB can be merged with annotation data such as logos, time and date stamps, addresses, etc., stored in a nonvolatile annotation data memory 33. The merger may be logic devices and buffers or other known devices for performing this function or the merger device may be deleted. The image data whether merged with additional data to be printed or not merged is then output to a writer-interface (WIF) output board 36. The WIF 36 modifies the image data before sending to the printhead 22 so that the data, for each pixel to be recorded by an LED on the printhead is adjusted to also control uniformity of that LED. An example of a grey level LED printhead that may be provided with corrected image data signals is disclosed in U.S. Pat. No. 5,253,934.

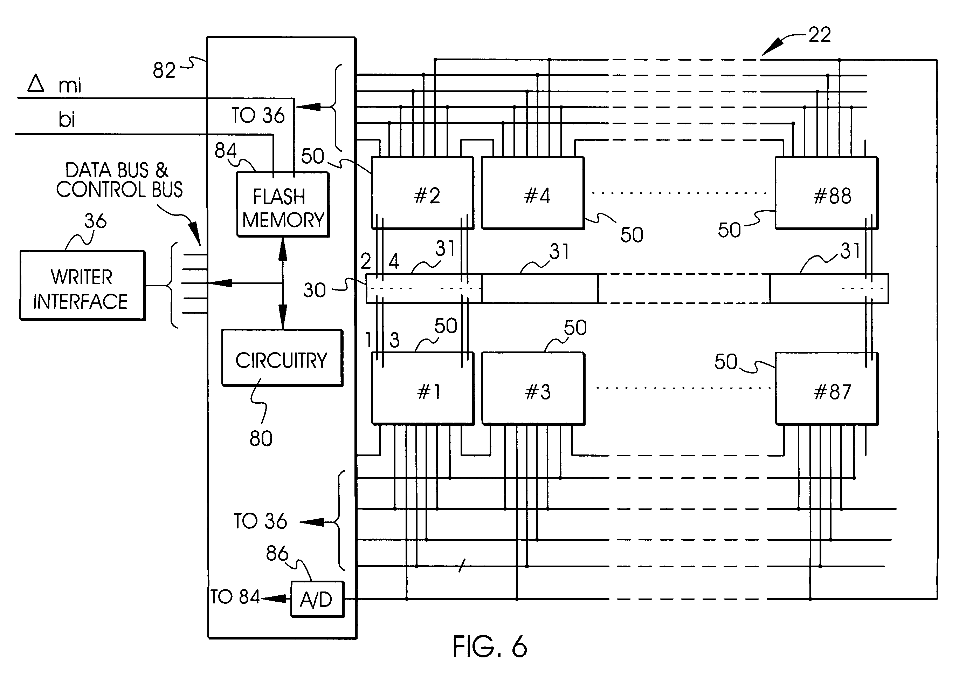

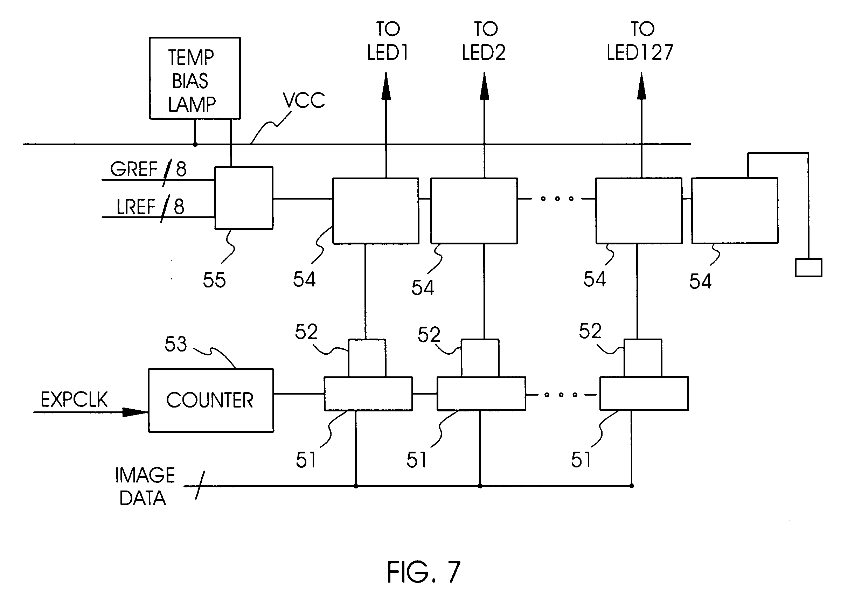

As noted in this patent and with reference to FIGS. 6 and 7, corrected image data and control signals, such as clock signal EXPCLK, token signals, latch signals, power, etc. are sent to the printhead from the writer-interface 36 over a data bus and control bus 39. The data and control signals are input into driver chips 50 (#1-#87) which are located on each side of a line of LED chip arrays 31. Each LED chip array includes for example 128 LEDs arranged in a line. The chip arrays are butted together to provide a single row of several thousand LEDs. The driver chips 50 receive the data and control signals and are used to generate current for driving the LEDs to which the driver chips are electrically connected. Within each driver chip, the corrected image data is latched in respective image data latch or storage registers 51 and an exposure period for recording a pixel is commenced and the duration of currents to respective LEDs determined by comparison by a comparator 52 of corrected image data signals with an output of a counter 53 that is counting exposure clock pulses. Control of current in each of plural driver channels is provided to respective LEDs on the printhead by a constant current driver that forms a part of a current mirror having a master circuit 55 that generates a controlled amount of current in response to digital current control data that is also sent to the printhead. In response to this current control data certain current-conducting transistors are enabled in the master circuit to cause a net current to flow in the master circuit and this net current is related to the current control data denoted in U.S. Pat. No. 5,253,934 as VREF and RREF. In the aforementioned patent, the term "VREF" refers to a current control data of 8-bits size that is provided identically to all the driver chips that are on the printhead while the term "RREF" refers to current control data of 8-bits size that may differ from driver chip to driver chip on the same printhead. As noted in the aforementioned patents, a row of say 128 LEDs may be formed on each chip array and a series of these arrays are assembled on a suitable support to provide a printhead with a single row of LEDs that are of several thousand LEDs. Each LED chip array may have one or preferably two driver chips associated therewith and mounted adjacent thereto for providing current to LEDs selected for recording a pixel. In response to selection or enablement of an LED a current is generated in a current-generating channel of the driver chip and this current energizes the respective LED to emit light for a period of time related to the corrected image data signal. The current to the; LED mirrors, i.e., is proportional to or related to that in the driver chip master circuit. Thus, effective control of the LED is provided with say 6-bits per pixel of image data to define a recording duration and two 8-bit of current control data used to control current thereto. The term VREF describes current control data that is applied to all the driver chips, it will hereinafter be referred to as GREF current control data to more precisely describe its characteristic as a "global reference" voltage generating data, whereas RREF will be referred to as LREF in view of its being "local reference" voltage generating data; i.e. it may vary from driver chip to driver chip on the printhead.

The WIF board 36 thus provides to the printhead 22 in addition to corrected image data signals, control and timing signals such as current control data GREF and LREF, signals for latching data in respective image data storage registers 51 [to be added in Fig. 7] , clock signals including that for timing exposure (EXPCLK). In addition, there are provided power and ground signals. The various control timing signals are provided by timing control board 38 that forms part of the control system for controlling the marking engine.

In order to speed up the calculation of the data stored in correction tables and reduce the communication time between the printhead and the WIF board it has been found to be advantageous to organize certain data for storage on the printhead so as to resolve this problem. Associated with the printhead 22 is a secondary or printhead interface (PIF) board 82 that includes a nonvolatile flash memory 84 ($E^2$PROM technology) and supporting circuitry 80/86 for interfacing the WIF board with the PIF board. The flash memory stores pre-binned data for this printhead that is to be loaded into the BIN LUTs. The pre-binned data is determined during factory calibration of the printhead wherein measurements are made of the light output of each LED. In calibrating the LED printhead, there is attached to the printhead a lens for focusing light from the LEDs. The lens is preferably a Selfoc lens, trademark Nippon Sheet Glass Co., Ltd. However, prior to attaching the lens, measurements are made of the spacing between adjacent LEDs on adjacent LED chip arrays to determine spacing errors (butt-spacing errors) from the nominal 1/600th of an inch spacing existing between adjacent LEDs on the same LED chip array of a printhead that is nominally, in this example, a 600 DPI (dots per inch) printhead. As noted in U.S. Application Ser. No. 08/310,112 and now U.S. Pat. No. 5,586,055, as butt-spacing errors between abutting LED chip arrays can be somewhat offset by modifying the exposures of the LEDs that are incorrectly spaced. For example, two LEDs that are spaced further apart then nominal and used in a DAD electrophotographic process may be provided with extra exposure time than would be provided for an LED of the same brightness or power characteristic. When used in a CAD electrophotographic process system, such LEDs would be provided with less exposure time.

During calibration the LED and IC manufacturer measures and stores the brightness characteristic for each LED in terms of power $P\_i$ where i is the identity of each LED. The LEDs are located in a single row on the printhead in, for example, 44 chip arrays of 128 LEDs each so that the printhead when later mounted on the copier/printer extends perpendicular to the direction of movement of the photoconductor and extends for substantially the full width of the photoconductor. Also measured, calculated and stored is the average light output <LOP_cal> at the calibration point <GREF_cal> together with each LED's linear slope characteristic $m\_i$ and quadratic curvature characteristic, $b\_i$ and/ or the change of each LED's linear slope characteristic, $\Delta m\_i$, and the quadratic characteristic, $b\_i$.

After factory calibration of the printhead assembly when the printhead and its lens are not on the copier/printer, the printhead assembly is mounted on the copier/printer.

The maximum nominal exposure time T_max is determined wherein T_max is the product of the maximum nominal duty cycle multiplied by the reciprocal of the in-track resolution and the reciprocal of the photoconductive web speed. The maximum nominal duty cycle represents the percentage of the available recording time between main line exposure periods. It is desirable to have the maximum nominal exposure for an LED of average brightness to be about 40% of the total available main line exposure period. Note that some LEDs on this printhead that are less powerful light emitters may have maximum exposure periods that are greater than 40% of the total available main line exposure period. The in-track resolution for this printhead may be made identical with the cross-track resolution. Thus, if a 600 DPI printhead is used, the cross-track resolution is 600 DPI and the in-track resolution may be set to have an in-track resolution of 600 DPI also. This is merely a preferred example. The in-track resolution may be made higher or lower than that of the cross-track direction.

For the calibration of the printhead, the maximum exposure time T_max (depending on resolution and process speed) is chosen according to the above and the primary current controllers are loaded with one and the same value GREF_cal. The output power $P\_i$ of each group of LEDs connected to a single current controller is measured and adjusted by means of the secondary control value LREF such that the average power of all LEDs connected to one current controller yields the desired absolute <LOP_cal>. In a second step of the calibration, the average light output <LOP> is measured as a function of <GREF> for two more values e.g. at a high and a low value of <GREF> to determine the slope <LOP>=f(<GREF>).

The prior step provides the first correction known in the prior art. The invention adds further data to provide second and third correction. With the invention, the LEDs may also be grouped together by their variation for the average slope. As such, LED with the same slope for an operating characteristic will be grouped together. As an alternative, one can store the slope and/or slope deviation for each LED. By storing $\Delta m\_i$ for each LED, where $\Delta m\_i$ is the variation of slope from the average slope, <m>, the individual GREF_i for each LED is calculated in accordance with the algorithm given above in Step #2 correction. Similar data for $\Delta b\_i$ is stored and the algorithm in Step #3 above is used to correct for second order, non-linear characteristics. With the invention, the modified GREF_i* may include not only the first or single point correction, but also the second, linear correction and the third correction. The second and third corrections are in the form of known constants that are applied to the LED based on the operating conditions (applied voltage or current) of the LED and the desired output.

**REFERENCE LIST**

| | |
|---|---|
| 10 | copier / printer apparatus |
| 12 | photoconductive belt |
| 14 | motor |
| 16 | LCU |
| 18 | charging station |
| 20 | programmable controller |
| 22 | print head |
| 24 | data source |
| 25 | development area |
| 25a, 25b | development stations |
| 30 | exposure process controller (EPC) |
| 31 | chip arrays |
| 32 | job image buffer (JIB) |
| 33 | data memory |
| 34 | image data merger device |
| 36 | writer interface (WIF) output board |
| 38 | timing control board |
| 39 | control bus |
| 42 | transfer station |
| 48 | cleaning station |
| 49 | fuser station |
| 50 | driver chips |
| 51 | storage register |
| 52 | comparator |
| 53 | counter |
| 55 | master circuit |
| 76 | densitometer |
| 77 | controller |
| 80 | supporting circuitry |
| 82 | board |
| 84 | memory |
| 86 | supporting circuitry |
| #1-#87 | driver chips |
| S | sheet |

**Claims**

1. A method for providing a global reference value to tailor the output of each LED in an electrographic copier or printer that exposes a charged photosensitive member to light from an array of light emitting diodes (LEDs), the method comprising:

   storing data signals representative of differences between the average rate of light output as a function of applied voltage or supplied current of the LEDs and the actual rate of light output as a function of applied voltage or supplied current of the LEDs; and
   adjusting the output of the LEDs by a global amount in accordance with the stored difference data signals.

2. The method of claim 1 wherein the stored difference data signal for each LED represents a difference between an average linear rate of change and the individual linear rate of change of each LED.

3. The method of claim 1 wherein the stored difference data signal for each LED represents a difference between an average quadratic rate of change and the individual quadratic rate of change of each LED.

**4.** The method of claim 1 further comprising grouping together LEDs with substantially the same difference data signal.

**5.** The method of claim 1 further comprising setting a minimum and a maximum output based on the dimmest LED;

**6.** A non-impact printer apparatus comprising:

a printhead, including a plurality of recording elements for recording image data, the recording elements emitting radiation for recording on a recording medium;
correction circuitry for correcting non-uniformities in the recording elements, said correction circuitry including:

a circuit for addressing each recording element with a global reference data signal to change calibration of the recording element;
a memory for holding data corresponding to a difference between the average emission characteristic of the recording elements and the individual emission characteristic of each recording element;
a circuit for reading the data of for each recording element and altering the calibration of each recording element in accordance with the read data.

**7.** The non-impact printer apparatus of claim 6 wherein the difference corresponds to a difference between a linear regression of the individual and average light emission characteristics.

**8.** The non-impact printer of claim 6 wherein the difference corresponds to a difference between a non-linear regression of the individual and average light emission characteristics.

**9.** The non-impact printer of claim 6 wherein the memory stores the difference between a linear regression of the individual and average light emission characteristics and a difference between a non-linear regression of the individual and average light emission characteristics and the non-impact printer uses one or both differences to adjust the light output of the LEDs.

**10.** The non-impact printer of claim 6 wherein LEDs with substantially the same difference data signal are grouped together.

**11.** A method for improving performance of an electrographic copier or printer that exposes a charged photosensitive member to light from an array of light emitting diodes (LEDs) wherein the outputs of all the LEDs are controlled by a global reference representative of the average rate of light output as a function of change in voltage applied or current supplied to the LEDs and adjusts the output of each LED in accordance with the global reference representative of the average rate of light output changes, comprising:

storing data signals representative of differences between the global reference representative of the average rate of light output changes and the individual linear rate of light output as a function of applied voltage or supplied current of the LEDs; and
adjusting the output of the LEDs by a global amount in accordance with the stored difference data signals.

**12.** The method of claim 11 wherein the stored difference data signal for each LED represents a difference between an average linear rate of change and the individual linear rate of change of each LED.

**13.** The method of claim 11 wherein the stored difference data signal for each LED represents a difference between an average quadratic rate of change and the individual quadratic rate of change of each LED.

**14.** The method of claim 11 further comprising grouping together LEDs with substantially the same difference data signal.

**15.** The method of claim 11 further comprising setting a minimum and a maximum output based on the dimmest LED.

**16.** An electrographic copier or printer that exposes a charged photosensitive member to light from an array of light emitting diodes (LEDs) wherein the outputs of all the LEDs are controlled by a global reference representative of the average emission of the LEDs as a function of change in voltage applied or current supplied to the LEDs and adjusts the output of each LED in accordance with the global reference representative of the average rate of light output changes, comprising:

a printhead, including a plurality of recording elements for recording image data, the recording elements emitting radiation for recording on a recording medium;
correction circuitry for correcting non-uniformities in the recording elements, said correction circuitry including:

a circuit for addressing each recording element with a global reference data signal to change calibration of the recording element;
a memory for holding data corresponding to a difference between the average emission characteristic of the recording elements and the individual emission characteristic of each recording element;
a circuit for reading the data of for each recording element and altering the calibration of each recording element in accordance with the read data.

17. The apparatus of claim 16 wherein the stored difference data signal for each LED represents a difference between an average linear rate of change and the individual linear rate of change of each LED.

18. The method of claim 16 wherein the stored difference data signal for each LED represents a difference between an average quadratic rate of change and the individual quadratic rate of change of each LED.

19. The apparatus of claim 16 further wherein LEDs with substantially the same difference data signal are grouped together.

20. The method of claim 16 wherein minimum and a maximum outputs are set based on the dimmest LED.

LOP

MAX LOP
(BRIGHTEST)

LOP_MAX

<LOP>
<AVERAGE>

LOP_CAL

MIN SLOPE
(DIMMEST)

LOP_MIN

GREF_CAL        GREF

FIG. 1

LOP
LOP_MAX

<LOP>

LOP_CAL

LOP_MIN

GREF_CAL        GREF

FIG. 2

$LOP_{res} = b*G_{ref}{}^2$

OFFSET

MIN (Gref)        (Gref)        MAX (Gref)

LOP = f(GREF)        FIG. 3

FIG. 4

FIG. 5

EP 1 460 578 A1

FIG. 6

△ mi

bi

DATA BUS &
CONTROL BUS

36

WRITER
INTERFACE

82

TO 36

84

FLASH
MEMORY

50

CIRCUITRY

80

TO 36

86

TO 84    A/D

30

#2    #4    #88

2  4    31    31    50    50    31

1  3    50    50    50

#1    #3    #87

22

EP 1 460 578 A1

FIG. 7

EP 1 460 578 A1

**European Patent Office**

## EUROPEAN SEARCH REPORT

Application Number

EP 04 00 5669

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | US 5 859 658 A (HAMMOND THOMAS J) 12 January 1999 (1999-01-12) | 6 | G06K15/12 B41J2/45 |
| A | * column 3, line 43 - column 7, line 60 * | 1,11,16 | |
| X | US 5 805 197 A (FLEMING PAUL JOHN  ET AL) 8 September 1998 (1998-09-08) | 6 | |
| A | * column 6, line 25 - column 10, line 15 * | 1,11,16 | |
| D,X | US 5 586 055 A (YEH HUR-JYE  ET AL) 17 December 1996 (1996-12-17) | 6 | |
| A | * column 7, line 1 - column 9, line 4 * | 1,11,16 | |

| | | | TECHNICAL FIELDS SEARCHED (Int.Cl.7) |
|---|---|---|---|
| | | | G06K B41J |

The present search report has been drawn up for all claims

| Place of search | Date of completion of the search | Examiner |
|---|---|---|
| THE HAGUE | 14 June 2004 | De Groot, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 04 00 5669

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2004

| Patent document cited in search report | | Publication date | Patent family member(s) | | Publication date |
|---|---|---|---|---|---|
| US 5859658 | A | 12-01-1999 | JP | 9123518 A | 13-05-1997 |
| US 5805197 | A | 08-09-1998 | NONE | | |
| US 5586055 | A | 17-12-1996 | NONE | | |

EPO FORM P0459

For more details about this annex : see Official Journal of the European Patent Office, No. 12/82